# FASCICULE DE BREVET EUROPEEN

(11) **EP 1 705 779 B1**
(45) Date de publication et mention de la délivrance du brevet: **20.04.2011**
(21) Numéro de dépôt: 06004692.7
(22) Date de dépôt: 08.03.2006
(51) Int. Cl.: H02K 5/24

(54) **Unité motrice comprenant un moteur électrique intégré dans un support formant cavité d'atténuation du rayonnement acoustique.**
Antriebseinheit mit einem in einem akustischen Strahlungsschwächungshohlraum abgestützen Elektromotor.
Drive unit comprising an electric motor integrated in a support forming an attenuation cavity for acoustic radiation.

(30) Priorité: 24.03.2005 FR 0502918
(43) Date de publication de la demande: 27.09.2006
(73) Titulaire: Valeo Systèmes Thermiques, 78321 Le Mesnil St Denis Cedex (FR)
(72) Inventeur: Van Schammelhout, Cédric, 92800 Puteaux (FR); Legot, Laurent, 75020 Paris (FR); Vincent, David, 28230 Gallardon (FR)
(74) Mandataire: Léveillé, Christophe

(56) Documents cités:
- DE-A1- 10 136 290
- FR-A- 2 783 368
- FR-A- 2 801 738
- US-A- 5 786 647
- US-A1- 2004 032 177
- PATENT ABSTRACTS OF JAPAN vol. 2000, no. 23, 10 février 2001 (2001-02-10) -& JP 2001 153183 A (NIPPON DENSAN CORP), 8 juin 2001 (2001-06-08)
- PATENT ABSTRACTS OF JAPAN vol. 014, no. 210 (E-0922), 27 avril 1990 (1990-04-27) & JP 02 046145 A (HITACHI LTD), 15 février 1990 (1990-02-15)
- PATENT ABSTRACTS OF JAPAN vol. 1999, no. 12, 29 octobre 1999 (1999-10-29) -& JP 11 206066 A (HITACHI LTD; NISSAN MOTOR CO LTD), 30 juillet 1999 (1999-07-30)
- PATENT ABSTRACTS OF JAPAN vol. 017, no. 535 (E-1439), 27 septembre 1993 (1993-09-27) -& JP 05 146113 A (ASMO CO LTD), 11 juin 1993 (1993-06-11)
- PATENT ABSTRACTS OF JAPAN vol. 1998, no. 08, 30 juin 1998 (1998-06-30) -& JP 10 070863 A (FUJI ELECTRIC CO LTD), 10 mars 1998 (1998-03-10)

## Description

L'invention se rapporte à une unité motrice comprenant un moteur électrique intégré dans un support creux conformé en cavité d'atténuation du rayonnement acoustique.

Elle concerne notamment une telle unité motrice équipant le groupe moto-ventilateur d'un système de chauffage et de climatisation d'une automobile.

Sur un véhicule automobile, les moyens de chauffage et de climatisation sont le plus souvent combinés en un même ensemble comprenant, notamment, un moteur électrique. Il est connu de loger ce moteur à l'intérieur d'un support creux d'atténuation du rayonnement acoustique. Un exemple de support est illustré dans le document JP 02-046145. Notamment, la demanderesse a développé un tel support où des branches d'amortissement, sous forme de barrettes en matériau souple, sont intercalées entre ledit moteur et des zones spécifiques de la paroi latérale, à l'intérieur du support. Ce dernier forme une cavité conformée en fonction de la forme et des dimensions du moteur. Ainsi, le moteur est maintenu et immobilisé grâce, notamment, aux branches d'amortissement définies ci-dessus.

Ce type de montage donne globalement satisfaction en matière de filtration des bruits et vibrations. On peut néanmoins constater parfois une émergence à certaines fréquences, notamment autour de 2 000 Hz, c'est-à-dire à une fréquence particulièrement audible.

L'invention permet de traiter de telles émergences à fréquences audibles. Globalement, l'invention consiste à recouvrir le support d'un matériau d'amortissement, au moins en regard de certaines zones.

Une définition précise de l'invention est donnée dans les revendications.

Ces blocs se comportent ainsi comme une masse lourde qui atténue l'émission des ondes vers l'extérieur du support.

Bien entendu, un enrobage plus important, voire total de la surface extérieure du support, resterait du domaine de l'invention revendiqué.

Le matériau d'amortissement est de préférence un élastomère, de consistance plus molle et plus souple que le matériau constituant le support lui-même.

Par exemple, des blocs de matériau élastomère s'étendent en regard des zones où sont situées les branches d'amortissement.

L'invention sera mieux comprise et d'autres avantages de celle-ci apparaîtront mieux à la lecture de la description qui va suivre d'un mode de réalisation d'une unité motrice à moteur électrique conforme à son principe, donnée uniquement à titre d'exemple, et faite en référence aux dessins annexés dans lesquels :
La figure 1 est une vue extérieure, en perspective du support de l'unité motrice ;
La figure 2 est une vue intérieure, en perspective, du même support ;
La figure 3 est une coupe selon un plan perpendiculaire à l'axe du support, le moteur étant représenté en trait mixte ; et
La figure 4 est une coupe IV-IV de la figure 3.

Sur les dessins, on a représenté une unité motrice 11, elle-même destinée à être incorporée à un équipement de chauffage et de climatisation d'un véhicule automobile.

L'unité motrice se compose d'un moteur électrique 12, classique et d'un support 14 conformé pour atténuer le bruit du moteur. Le support 14 est en matière plastique moulée, relativement rigide, par exemple un polypropylène chargé de talc. Il est conformé en fonction de la forme et des dimensions du moteur 12 et il comporte une large cavité 16 dans laquelle ledit moteur est inséré. La fonction première de ce support est le maintien du moteur. L'invention lui donne une seconde fonction : l'atténuation acoustique. Ce moteur est maintenu en place par certaines parties de la paroi intérieure de la cavité. Dans cet exemple, ces parties sont garnies d'éléments d'amortissement, ici en matériau élastomère, ce qui assure le découplage entre le moteur et le support.

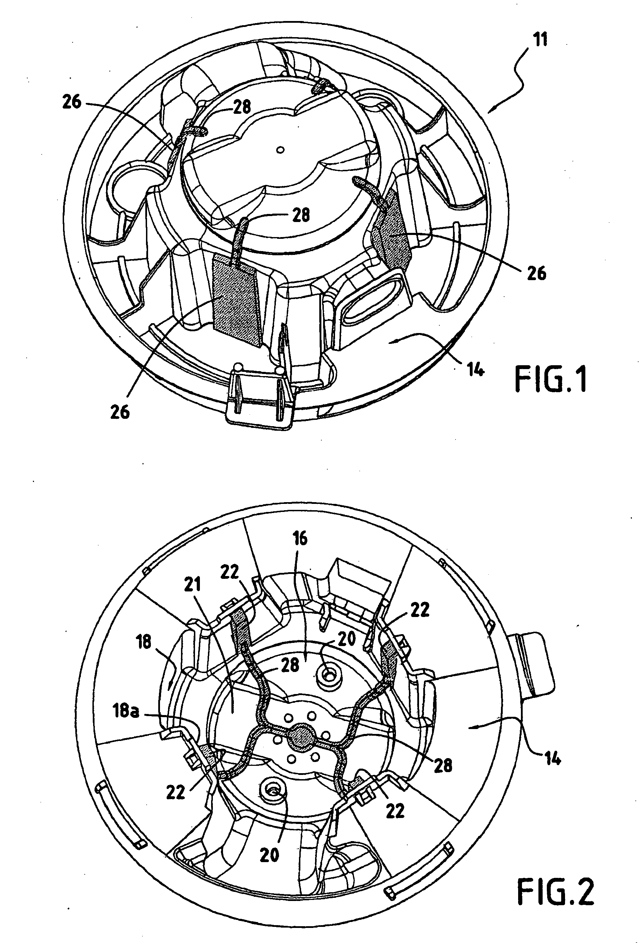

Sur la figure 2, on remarque aussi deux plots de matériau élastomère 20 faisant saillie de la paroi de fond 21 et quatre branches d'amortissement 22, en forme de bandes étroites, fixées sur la paroi latérale intérieure 18 de la cavité, sensiblement équidistantes et parallèles entre elles. Ces branches d'amortissement 22 sont globalement perpendiculaires à la paroi de fond 21. L'ensemble du support et des moyens d'amortissement est conformé et dimensionné pour que le moteur, une fois inséré dans la cavité, soit naturellement maintenu et "calé" par l'ensemble des éléments en matériaux d'amortissement, c'est-à-dire les plots 20 et les quatre branches d'amortissement 22.

Ces dernières sont ici disposées sur des zones spécifiques 18a de la paroi latérale intérieure de la cavité.

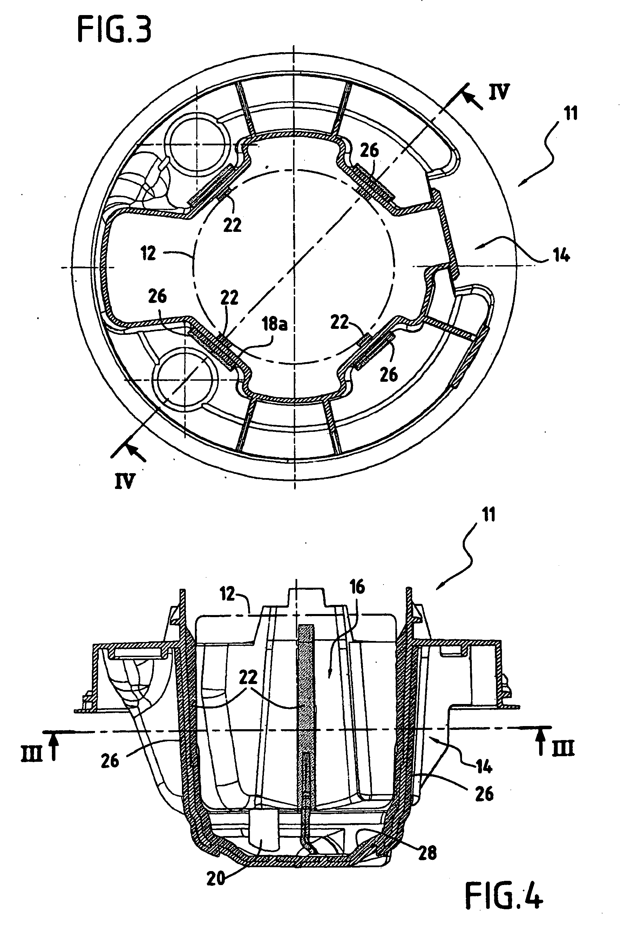

Les figures 3 et 4 montrent le moteur 12 en position d'engagement dans la cavité 16 du support.

Lorsque le moteur est en place, les branches d'amortissement 22 sont intercalées entre le moteur 12 et lesdites zones spécifiques 18a. Avantageusement, lesdites branches sont surmoulées à la surface intérieure de la cavité.

Selon l'invention, le support comporte en outre des blocs de matériau d'amortissement 26 fixés à sa surface extérieure et s'étendant au moins en regard des zones spécifiques 18a précitées.

Plus précisément, les blocs de matériau d'amortissement 26 sont disposées sur la surface extérieure des zones spécifiques 18a de manière à ce que les branches d'amortissement 22 et les blocs de matériau d'amortissement 26 soient directement opposés les uns par rapport aux autres, c'est-à-dire disposés face à face et séparés par la zone spécifique 18a.

Les blocs de matériau d'amortissement sont en élastomère, par exemple un élastomère thermoplastique d'une dureté de l'ordre de 40 shores, tel que celui commercialisé sous la marque "Santoprène".

Ces blocs de matériau d'amortissement en élastomère sont surmoulés à la surface extérieure du support d'atténuation. Le support est en plastique polypropylène, ce qui offre une parfaite combinaison avec l'élastomère thermoplastique. Le prolypropylène et l'élastomère sont fabriqués à partir du même monomère, ce qui permet une parfaite fusion lors du surmoulage.

Dans l'exemple représenté, les blocs 26 s'étendent sensiblement sur la même distance axiale que les branches d'amortissement correspondantes mais elles sont notablement plus larges que celles-ci.

Les blocs 26 ont ici la forme de plaquettes épaisses sensiblement rectangulaires ou légèrement trapézoïdales. D'autres formes sont possibles, essentiellement dictées par la configuration extérieure du support. Dans l'exemple, les branches d'amortissement 22 ont une largeur de 5 mm pour une épaisseur de 2,4 mm tandis que les blocs de matériau d'amortissement 26 ont une largeur de 20 mm et une épaisseur de 2 mm, les tolérances étant de ± 20%.

Les blocs 26 sont dans le même matériau que les branches d'amortissement 22.

Les branches d'amortissement 22 et les blocs de matériau d'amortissement 26 sont d'ailleurs avantageusement issus d'une même opération de surmoulage. En effet, on distingue (figures 1 et 2) les traces du surmoulage commun sous la forme de cordons d'élastomère 28 s'étendant à l'intérieur de la cavité, traversant des trous de communication prévus dans la paroi en matière plastique rigide du support et rejoignant les bords des blocs 26. Cependant, les opérations de surmoulages des branches 22 et des blocs 26, pourraient être faites séparément.

## Revendications

1. Unité motrice comprenant un moteur électrique (12) intégré dans un support (14) comportant une cavité (16) d'atténuation du rayonnement acoustique, ledit support comportant des branches d'amortissement (22) contre lesquelles le moteur est en contact et intercalées entre ledit moteur et des zones spécifiques de la paroi latérale intérieure de ladite cavité, **caractérisée en ce que** ledit support comporte en outre des blocs de matériau d'amortissement (26) fixés à sa surface extérieure et s'étendant au moins en regard desdites zones spécifiques.

2. Unité motrice selon la revendication 1, **caractérisée en ce que** lesdits blocs de matériau d'amortissement (26) forment des plaquettes sensiblement rectangulaires, plus larges que les branches d'amortissement en regard desquelles elles sont placées.

3. Unité motrice selon l'une des revendications précédentes, **caractérisée en ce** lesdits blocs de matériau d'amortissement (26) sont en élastomère.

4. Unité motrice selon l'une des revendications précédentes, **caractérisée en ce que** lesdits blocs de matériau d'amortissement (26) sont surmoulés à la surface extérieure dudit support d'atténuation.

5. Unité motrice selon l'une des revendications 1 à 4, **caractérisée en ce que** lesdites branches d'amortissement (22) et lesdits blocs de matériau d'amortissement sont du même matériau.

6. Unité motrice selon la revendication 5, **caractérisée en ce que** lesdites branches d'amortissement (22) et lesdits blocs de matériau d'amortissement (26) sont issus d'une même opération de surmoulage.

7. Unité motrice selon l'une des revendications précédentes, **caractérisée en ce que** lesdits blocs de matériau élastomère s'étendent sur sensiblement toute la surface extérieure dudit support.

## Claims

1. Driving unit comprising an electric motor (12) integrated into a support (14) comprising a cavity (16) for attenuating acoustic dispersion, said support comprising damping branches (22) against which the motor is in contact and inserted between said motor and specific zones of the interior lateral wall of said cavity, **characterised in that** said support further comprises blocks of damping material (26) fixed to its exterior surface and extending at least across from said specific zones.

2. Driving unit according to claim 1, **characterised in that** said blocks of damping material (26) form substantially rectangular pads, wider than the damping branches across from which they are placed.

3. Driving unit according to one of the preceding claims, **characterised in that** said blocks of damping material (26) are made of elastomer.

4. Driving unit according to one of the preceding claims, **characterised in that** said blocks of damping material (26) are over-moulded at the exterior surface of said attenuation support.

5. Driving unit according to one of claims 1 to 4, **characterised in that** said damping branches (22) and said blocks of damping material are of the same material.

6. Driving unit according to claim 5, **characterised in that** said damping branches (22) and said blocks of damping material (26) come from the same overmoulding operation.

7. Driving unit according to one of the preceding claims, **characterised in that** said blocks of elastomer material extend over substantially the entire exterior surface of said support.

## Patentansprüche

1. Triebeinheit, umfassend einen Elektromotor (12), der in einem Träger (14) integriert ist, der einen Hohlraum (16) zur Minderung der Schallstrahlung umfasst, wobei der Träger Dämpfungszweige (22) umfasst, mit denen der Motor in Kontakt steht und die zwischen dem Motor und spezifischen Bereichen der inneren Seitenwand des Hohlraums eingeschoben sind, **dadurch gekennzeichnet, dass** der Träger ferner Dämpfungsmaterialblöcke (26) umfasst, die an seiner äußeren Oberfläche befestigt sind und sich mindestens gegenüber den spezifischen Bereichen erstrecken.

2. Triebeinheit nach Anspruch 1, **dadurch gekennzeichnet, dass** die Dämpfungsmaterialblöcke (26) im Wesentlichen rechtwinklige Beläge bilden, die größer als die Dämpfungszweige sind, denen gegenüber sie angeordnet sind.

3. Triebeinheit nach einem der vorhergehenden Ansprüche, **dadurch gekennzeichnet, dass** die Dämpfungsmaterialblöcke (26) aus Elastomer bestehen.

4. Triebeinheit nach einem der vorhergehenden Ansprüche, **dadurch gekennzeichnet, dass** die Dämpfungsmaterialblöcke (26) über die äußere Oberfläche des Minderungsträgers geformt sind.

5. Triebeinheit nach einem der Ansprüche 1 bis 4, **dadurch gekennzeichnet, dass** die Dämpfungszweige (22) und die Dämpfungsmaterialblöcke aus dem gleichen Material bestehen.

6. Triebeinheit nach Anspruch 5, **dadurch gekennzeichnet, dass** die Dämpfungszweige (22) und die Dämpfungsmaterialblöcke (26) aus dem gleichen Überformvorgang stammen.

7. Triebeinheit nach einem der vorhergehenden Ansprüche, **dadurch gekennzeichnet, dass** die Blöcke aus Elastomermaterial sich im Wesentlichen über die gesamte äußere Oberfläche des Trägers erstrecken.
